# EUROPEAN PATENT APPLICATION

(11) **EP 4 492 549 A1**
(43) Date of publication of application: **15.01.2025**
(21) Application number: 23220672.2
(22) Date of filing: 29.12.2023
(51) Int. Cl.: H01M 50/204, H01M 50/342, H01M 50/358, H01M 50/367, H01M 50/383, H01M 50/30

(54) **BATTERY PACK**

(30) Priority: 12.07.2023 CN 202321838002 U
(71) Applicant: Eve Energy Co., Ltd., Huizhou, Guangdong 516006 (CN)
(72) Inventor: LIU, Xuelin, Huizhou, 516006 (CN)
(74) Representative: Nederlandsch Octrooibureau

(57) **Abstract**

A battery pack, including: a case, wherein the case includes a bottom protection plate, a frame, and an upper cover, the frame is located on the bottom protection plate, the upper cover is located on the frame, and the bottom protection plate, the frame, and the upper cover enclose to form an accommodation cavity; and a plurality of battery cells disposed on the bottom protection plate and located in the accommodation cavity. A pressure relief valve is disposed on the frame. A first channel and a second channel are provided in the frame. The first channel and the second channel are independent of each other, and the first channel is communicated with the pressure relief valve. A plurality of pressure relief holes is provided on a side of the bottom protection plate facing the accommodation cavity. A plurality of third channels is provided in the bottom protection plate. The pressure relief holes are communicated with a third channel, and the third channel is communicated with the first channel. The first channel and the third channel is configured as pressure relief channels, and the second channel is configured as an electric part accommodation channel.

## Description

### FIELD OF INVENTION

The present application relates to the field of battery technologies, and in particular, to a battery pack.

### BACKGROUND

A current thermal runaway protection scheme for a large cylindrical power battery system is not sufficiently mature, and there are some problems such as a complex design, large space occupation, and aggravation of thermal runaway. In conventional technologies, in the thermal runaway protection scheme for the large cylindrical power battery, pressure relief channels, electric parts and battery cells share same space. When thermal runaway occurs in the battery cells, materials such as high-temperature gas or burned battery cells may lead to high-voltage short circuit, resulting in aggravating the thermal runaway.

### SUMMARY

The present application provides a battery pack to resolve the foregoing technical problems.

The present application provides a battery pack, including: a case, wherein the case includes a bottom protection plate, a frame, and an upper cover, the frame is located on the bottom protection plate, the upper cover is located on the frame, and the bottom protection plate, the frame, and the upper cover enclose to form an accommodation cavity; and a plurality of battery cells disposed on the bottom protection plate and located in the accommodation cavity.

A pressure relief valve is disposed on the frame. A first channel and a second channel are provided in the frame. The first channel and the second channel are independent of each other, and the first channel is communicated with the pressure relief valve.

A plurality of pressure relief holes is provided on a side of the bottom protection plate facing the accommodation cavity. A plurality of third channels is provided in the bottom protection plate. The pressure relief holes are communicated with a third channel, and the third channel is communicated with the first channel.

The first channel and the third channel is configured as pressure relief channels, and the second channel is configured as an electric part accommodation channel.

### BENEFICIAL EFFECTS

The present application has the following beneficial effects. In the battery pack provided in the present application, the first channel (that is, a thermal runaway pressure relief channel), the second channel (that is, an electric part mounting channel), the third channels (that is, pressure relief channels at bottoms of the battery cells), and the battery cells are separately arranged, so that a risk that after thermal runaway occurs in the battery cells, thermal runaway aggravates due to short circuit caused by contact between high-temperature gas or burning materials and electric parts or the battery cells can be lowered. In addition, the first channel and the second channel are provided in the frame, and the third channels are provided in the bottom protection plate, so that internal space of the battery pack can be properly utilized, to reduce space occupancy.

### BRIEF DESCRIPTION OF DRAWINGS

FIG. 1 is a schematic diagram of an external structure of a battery pack according to some embodiments of the present application.
FIG. 2 is a schematic diagram of an exploded structure of a battery pack according to some embodiments of the present application.
FIG. 3 is a schematic diagram of a partial structure of the battery pack according to the embodiments in FIG. 2.
FIG. 4 is a schematic top view of a bottom protection plate and a frame of a battery pack according to some embodiments of the present application.
FIG. 5 is a schematic diagram of a structure of a fire-resistant component of a battery pack according to some embodiments of the present application.

### Description of Reference Numerals:

10-case, 100-bottom protection plate, 110-battery cell connecting portion, 111-pressure relief hole, 112-third channel, 120-battery cell non-connecting portion, 20-battery cell, 200-frame, 201-first transverse beam, 202-first vertical beam, 203-second vertical beam, 204-first corner, 205-second corner, 210-first channel, 211-first sub-channel, 212-second sub-channel, 220-second channel, 230-fourth channel, 300-upper cover, 310-sealing strip, 320-flange, 400-pressure relief valve, 500-fire-resistant component, 501-first fire-resistant component, 502-second fire-resistant component, 510-fire-resistant net, 511-first fire-resistant net, 512-second fire-resistant net, 520-support, 521-first support, 522-second support, 530-through hole, 540-reinforcing rib.

### DETAILED DESCRIPTION OF PREFERRED EMBODIMENTS

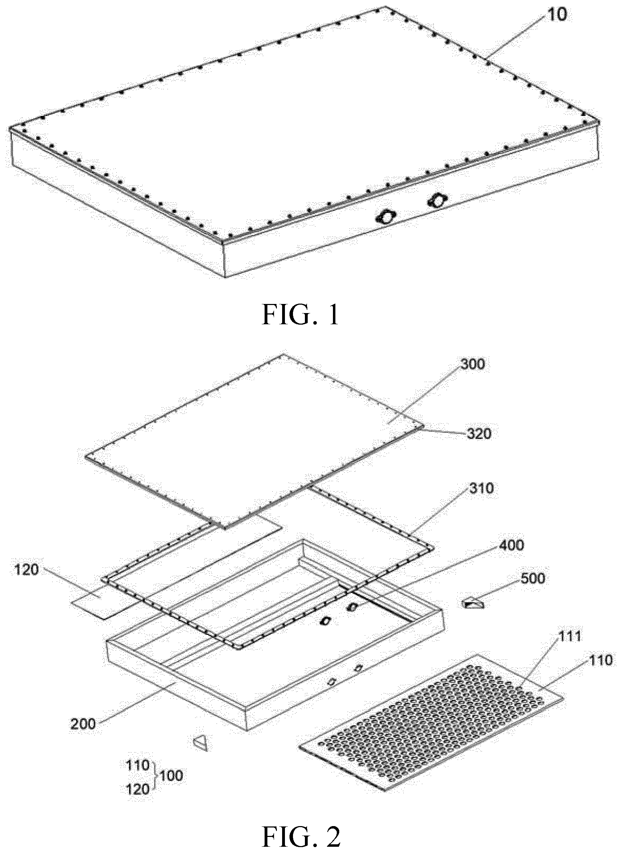

The present application provides a battery pack. With reference to FIG. 1 to FIG. 3, the battery pack includes a case 10 and a plurality of battery cells 20.

The case 10 includes a bottom protection plate 100, a frame 200, and an upper cover 300. The frame 200 is located on the bottom protection plate 100. The upper cover 300 is located on the frame 200. The bottom protection plate 100, the frame 200, and the upper cover 300 enclose to form an accommodation cavity. The battery cells 20 are disposed on the bottom protection plate 100 and located in the accommodation cavity. A pressure relief valve 400 is disposed on the frame 200. A first channel 210 and a second channel 220 are provided in the frame 200. The first channel 210 and the second channel 220 are independent of each other, and the first channel 210 is communicated with the pressure relief valve 400. A pressure relief holes 111 are provided on a side of the bottom protection plate 100 facing the accommodation cavity. A third channel 112 is provided in the bottom protection plate 100. The pressure relief holes 111 are communicated with the third channel 112, and the third channel 112 is communicated with the first channel 210. The first channel 210 and the third channel 112 is configured as pressure relief channels, and the second channel 220 is configured as an electric part accommodation channel.

With reference to FIG. 2, the case 10 may be a cuboid case 10. Correspondingly, the frame 200 may be a rectangular frame 200. The bottom protection plate 100 and the upper cover 300 may be rectangular. The bottom protection plate 100 is fixedly connected to a bottom of the frame 200, for example, by welding, so that the bottom protection plate 100 and the frame 200 have high connection strength and good sealing performance. The upper cover 300 is fixedly connected to a top of the frame 200 by a connection component. For example, the upper cover 300 may be locked and attached to the top of the frame 200 by a screw, and the upper cover 300 is detachably connected to the frame 200 by the connection component, to facilitate maintenance or replacement of internal members of the battery pack.

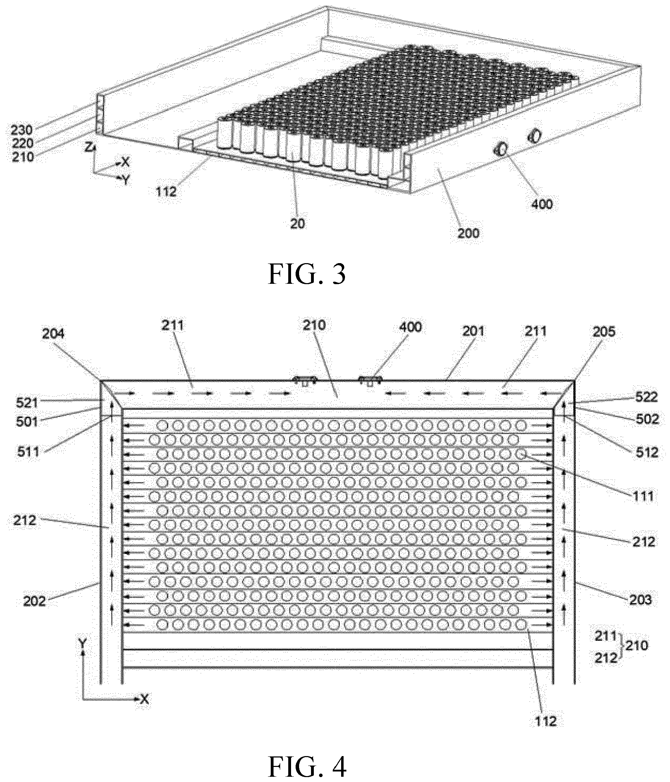

With reference to FIG. 3, an interior of the frame 200 is of a hollow structure and is divided into a plurality of channels. The frame 200 includes at least the first channel 210 and the second channel 220. The first channel 210 is configured to discharge gas generated caused by thermal runaway of the battery cells 20. The second channel 220 is configured to accommodate electric parts in the battery pack, for example, wires. At least one pressure relief valve 400 is mounted on an outer wall of the frame 200. The first channel 210 is communicated with the outside through the pressure relief valve 400, to discharge the gas in the first channel 210 from the battery pack.

With reference to FIG. 4, a plurality of battery cell mounting positions is provided on the bottom protection plate 100. Bottoms of the battery cells 20 are fixed on the battery cell mounting positions, to maintain the battery cells 20 relatively fixed. A plurality of pressure relief holes 111 is provided on the battery cell mounting positions. The pressure relief holes 111 are located on the bottoms of the battery cells 20, and the pressure relief holes 111 are communicated with the third channels 112, so that when thermal runaway occurs in the battery cells 20, generated gas is discharged from the bottoms of the battery cells 20 into the third channels 112.

A plurality of holes is provided on a side of the frame 200 facing the bottom protection plate 100. The holes are communicated with the first channel 210. The third channels 112 are communicated with the first channel 210 through the holes, to discharge gas in the third channels 112 into the first channel 210. The gas in the first channel 210 is discharged from the battery pack through the pressure relief valves 400.

In the present application, the first channel 210 (that is, a thermal runaway pressure relief channel), the second channel 220 (that is, an electric part mounting channel), the third channels 112 (that is, pressure relief channels at the bottoms of the battery cells 20), and the battery cells 20 are separately arranged, so that a risk that after thermal runaway occurs in the battery cells 20, thermal runaway aggravates due to short circuit caused by contact between high-temperature gas or burning materials and the electric parts or the battery cells 20 can be lowered. In addition, the first channel 210 and the second channel 220 are provided in the frame 200, and the third channels 112 are provided in the bottom protection plate 100, so that internal space of the battery pack can be properly utilized, to reduce space occupancy.

In an embodiment, with reference to FIG. 3, the frame 200 further includes a fourth channel 230. The fourth channel 230 is provided close to the upper cover 300 and configured as an isolated channel for the connection component. In a direction perpendicular to the bottom protection plate 100, the first channel 210, the second channel 220, and the fourth channel 230 are sequentially stacked and independent of each other. The first channel 210 is provided on a side of the bottom protection plate 100 close to the battery cells 20. The fourth channel 230 is provided on a side of the upper cover 300 close to the battery cells 20.

With reference to FIG. 3, in the direction perpendicular to the bottom protection plate 100 (that is, a Z direction), the first channel 210, the second channel 220, and the fourth channel 230 are sequentially stacked from bottom to top. The frame 200 and the upper cover 300 are fixed together by the connection component, for example, a screw. The fourth channel 230 is provided on a side close to the upper cover 300, to facilitate sealing of the connection component such as a screw in the fourth channel 230 to isolate the connection component from a pressure relief cavity, the electric parts, and the like, to ensure sealing performance of positions at which the upper cover 300 and the frame 200 are connected. The first channel 210 is provided on a side close to the bottom protection plate 100, to facilitate communication between the third channels 112 and the first channel 210, to collect gas in the third channels 112 into the first channel 210.

In an embodiment, with reference to FIG. 4, the first channel 210 includes a first sub-channel 211 and second sub-channels 212. The first sub-channel 211 is communicated with the pressure relief valves 400. The second sub-channels 212 are communicated with the first sub-channel 211. The third channels 112 are communicated with the second sub-channels 212. The battery pack further includes a fire-resistant component 500. The fire-resistant component 500 is disposed in the first channel 210 and located between the pressure relief valve 400 and a junction formed by the second sub-channels 212 and the first sub-channel 211. When thermal runaway occurs in the battery cells 20, gas generated by the battery cells 20 is discharged from the bottoms of the battery cells 20 into the third channels 112. The gas in the third channels 112 is delivered into the second sub-channels 212 for collection. The gas collected in the second sub-channels 212 is finally delivered into the first sub-channel 211, and finally discharged from the first sub-channel 211 to the outside of the battery pack through the pressure relief valve 400.

The fire-resistant component 500 is disposed in the first channel 210 and configured to prevent burning materials after thermal runaway occurs in the battery cells 20 from rushing out of the outside. In addition, external open flames can be blocked to some extent. This effectively delays contact between flammable materials or flammable gas in the battery pack and the outside air, to avoid generation of open flames or sparks outside the battery pack after thermal runaway occurs. The fire-resistant component 500 may be a fire-resistant net, a fire-resistant board, or the like, but is not limited thereto.

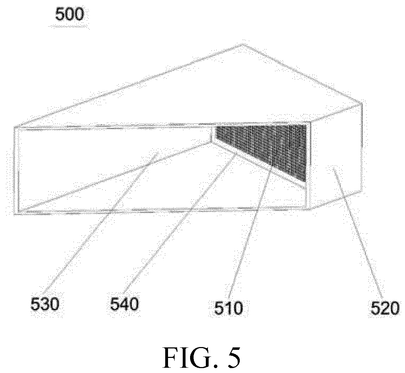

In some embodiments, with reference to FIG. 5, the fire-resistant component 500 includes a fire-resistant net 510 and a support 520. A through hole 530 running through the support 520 is provided in the support 520. The through hole 530 is communicated with the first channel 210. The fire-resistant net 510 is located on a side of the support 520 and covers the through hole 530.

With reference to FIG. 4 and FIG. 5, the support 520 is of a frame structure with a hollow interior. The through hole 530 is communicated with the first channel 210, to allow gas to flow. An outer wall of the support 520 is attached to an inner wall of the frame 200, for example, by welding, so that the support 520 is fixed to the frame 200, to prevent the support 520 from being displaced in the first channel 210 due to an impact force of gas. The fire-resistant net 510 is a mesh sheet, which may be bonded to an end of the support 520 using structural adhesive and cover the through hole 530. The fire-resistant net 510 can prevent burning materials after thermal runaway occurs in the battery cells 20 from rushing out of the outside. In addition, external open flames can be blocked to some extent. This effectively delays contact between flammable materials or flammable gas in the battery pack and the outside air, to avoid generation of open flames or sparks outside the battery pack after thermal runaway occurs.

A material of the support 520 may be aluminum profile. A material of the fire-resistant net 510 may be steel wires. For example, the fire-resistant net 510 may be of a mesh structure made of 0.1 mm steel wires with a spacing of 1 mm, but is not limited thereto.

In the present embodiment, the support 520 supports and fixes the fire-resistant net 510. This can improve connection reliability of the fire-resistant net 510 in the first channel 210, and prevent the fire-resistant net 510 being deformed or displaced due to impact of gas.

In some embodiments, with reference to FIG. 4, the battery pack includes two fire-resistant assemblies 500. The two fire-resistant assemblies 500 are respectively disposed at two corners on a side in the first channel 210 close to the pressure relief valve 400. The support 520 is wedge-shaped and matches a corner shape of the frame 200. An end of the support 520 provided with the fire-resistant net 510 is close to the battery cells 20.

With reference to FIG. 4, the frame 200 has a first transverse beam 201, a first vertical beam 202, and a second vertical beam 203. The first vertical beam 202 and the second vertical beam 203 are connected to two ends of the first transverse beam 201, and separately perpendicular to the first transverse beam 201. A first corner 204 is provided at a position at which the first vertical beam 202 and the first transverse beam 201 are connected. A second corner 205 is provided at a position at which the second vertical beam 203 and the first transverse beam 201 are connected. The corners are right angles.

With reference to FIG. 4, the battery pack includes a first fire-resistant component 501 and a second fire-resistant component 502. The first fire-resistant component 501 is disposed at the position corresponding to the first corner 204 in the first channel 210. The second fire-resistant component 502 is disposed at the position corresponding to the second corner 205 in the first channel 210. The first fire-resistant component 501 includes a first support 521 and a first fire-resistant net 511. The second fire-resistant component 502 includes a second support 522 and a second fire-resistant net 512. The first support 521 and the second support 522 are wedge-shaped. The first support 521 and the second support 522 each have an inclined end and a horizontal end. The inclined end is located on an oblique diagonal of the corner. The horizontal end matches a cross-sectional shape of the first channel 210, and is located in the vertical beam and close to the battery cells 20. The first fire-resistant net 511 is located on the horizontal end of the first support 521. The second fire-resistant net 512 is located on the horizontal end of the second support 522. The support 520 is configured as a wedge shape and mounted at the corner of the frame 200, so that the fire-resistant assemblies 500 can be further stably fixed in the first channel 210, to prevent the fire-resistant assemblies 500 from being displaced in the first channel 210 due to impact of gas.

With reference to FIG. 4, directions indicated by arrows in the figure are gas flow directions in the third channels 112 and the first channel 210. When thermal runaway occurs in the battery cells 20, gas generated from the bottoms of the battery cells 20 enters into the third channels 112 from the pressure relief holes 111. A part of the gas in the third channels 112 is input in a first direction (an X direction) toward the first vertical beam 202 into the first channel 210 (that is, the second sub-channel 212) in the first vertical beam 202, then flows into the first channel 210 (that is, the first sub-channel 211) in the first transverse beam 201 through the first fire-resistant component 501, and is discharged to the outside of the battery pack through the pressure relief valve 400. Another part of the gas in the third channels 112 is input in the first direction (the X direction) toward the second vertical beam 203 into the first channel 210 (that is, the second sub-channel 212) in the second vertical beam 203, then flows into the first channel 210 (that is, the first sub-channel 211) in the first transverse beam 201 through the second fire-resistant component 502, and is discharged to the outside of the battery pack through the pressure relief valve 400, to implement pressure relief of the battery pack.

It should be noted that the structure of the frame is not limited to the rectangular structure in the foregoing embodiments, but may alternatively be another shape. A quantity of the fire-resistant assemblies is not limited to two, but may alternatively be one or three or more. A shape of the support is not limited to the wedge shape, but may alternatively be a regular shape such as a rectangle or an irregular shape. The fire-resistant net is not limited to being disposed at an end of the support, but may alternatively be located in the support.

In some embodiments, with reference to FIG. 5, the fire-resistant component 500 further includes a reinforcing rib 540. The reinforcing rib 540 is located on a side of the fire-resistant net 510 close to a cavity. The reinforcing rib 540 is of a hollow frame structure, and abuts against peripheral edges of the side of the fire-resistant net 510 close to the cavity, to further reinforce the fire-resistant net 510, and prevent the fire-resistant net 510 from being rushed out of the support 520 due to impact of gas during a pressure relief process. The reinforcing rib 540 may be fixed on an inner wall of the support 520 by welding or bonding.

In some embodiments, with reference to FIG. 2 and FIG. 3, the bottom protection plate 100 includes a battery cell connecting portion 110 and a battery cell non-connecting portion 120. The third channels 112 are provided in the battery cell connecting portion 110, and the battery cell non-connecting portion 120 is of a flat-plate structure.

With reference to FIG. 2 and FIG. 3, the bottom protection plate 100 includes the battery cell connecting portion 110 and the battery cell non-connecting portion 120. The battery cell connecting portion 110 is configured to support the battery cells 20. In the battery cell connecting portion 110, aluminum extrusion profile may be used to be extruded to form a cavity with the third channels 112. In addition, circular holes are formed on an upper surface of the aluminum extrusion profile to form the pressure relief holes 111, to implement exhaust and pressure relief of the battery cells 20 to protect the battery cells 20. Before the battery cell connecting portion 110 is welded to the frame 200, electrophoresis processing needs to be performed on the battery cell connecting portion 110. After the battery cell connecting portion 110 is welded to the frame 200, insulating layers need to be sprayed on an upper surface of the battery cell connecting portion 110 and the pressure relief holes 111, to achieve an effect of insulating the battery cell connecting portion 110 from the battery cells 20. In the battery cell connecting portion 110 in the present application, functions of a bottom protection plate and a battery cell tray in conventional technologies are integrated. This can protect the bottoms of the battery cells 20, and reduce quantities of parts and components, thereby greatly reducing costs of the parts and components, simplifying procedures of process assembly, and reducing production costs. In addition, because the bottom protection plate and the battery cell tray are integrated, an overall size of the battery pack in a height direction is reduced.

The battery cell non-connecting portion 120 is configured to bear other structures in the battery pack. Because the battery cell non-connecting portion 120 is not in direct contact with the battery cells 20, there is no need to release pressure, so that there is no need to protect the battery cells 20. For example, the battery cell non-connecting portion 120 may be welded to the frame 200 using a 2 mm aluminum plate. The battery cell non-connecting portion 120 is of a flat-plate structure as a whole and does not need to undergo surface processing. Therefore, a manufacturing process is simple with low costs and good sealing performance.

In some embodiments, with reference to FIG. 4, the battery pack includes a plurality of rows of battery cells 20. Each row of battery cells 20 includes the plurality of battery cells 20. The plurality of battery cells 20 extends in the first direction. The plurality of third channels 112 is provided in the bottom protection plate 100. The plurality of third channels 112 is arranged at intervals, and the third channels 112 extend in the first direction. Each third channel 112 corresponds to a row of the battery cells 20. The plurality of third channels 112 is separately communicated with the second sub-channels 212. The second sub-channels 212 collect and deliver gas input from the third channels 112 to the first sub-channel 211, and then the gas is output out of the battery pack from the first sub-channel 211 through the pressure relief valve 400.

With reference to FIG. 4, in the battery pack, in the first direction (the X direction), the plurality of battery cells 20 is arranged in rows. In a second direction (a Y direction) perpendicular to the first direction, the plurality of rows of battery cells 20 is included. The plurality of third channels 112 is arranged in the bottom protection plate 100 in the second direction. The third channels 112 extend in the first direction. One third channel 112 is correspondingly arranged below a row of the battery cells 20. The third channels 112 are configured to perform pressure relief on corresponding battery cells 20. The plurality of third channels 112 is arranged at intervals to isolate pressure relief channels of different rows of battery cells 20, to prevent thermal runaway of different rows of battery cells 20 from aggravating due to impact of gas or flammable materials ejected from a single battery cell on other rows of battery cells 20.

In some embodiments, with reference to FIG. 2, the battery pack further includes a sealing strip 310. The sealing strip 310 is disposed between the upper cover 300 and the frame 200, to improve sealing performance between the frame 200 and the upper cover 300. The sealing strip 310 may be made of a plastic material, but is not limited thereto.

In some embodiments, with reference to FIG. 2, a plurality of flanges 320 is provided on edges of the upper cover 300. The flanges 320 extend toward a side of the frame 200 and are fixedly connected to the frame 200.

The upper cover 300 may be made of a 1 mm-thick SPCC metal plate with four folded edges. The flanges 320 cover the sealing strip 310 and a junction formed by the upper cover 300 and the frame 200, to avoid abnormal sealing, aging sealing or sealing failure caused by direct impact of high-pressure water to sealed junctions and the sealing strip 310, thereby further improving sealing performance between the upper cover 300 and the frame 200.

A surface of the upper cover 300 needs to undergo electrophoresis processing and plastic spraying processing to meet a salt spray requirement of no red rust for 720 hours. The sealing performance of the case 10 can meet a requirement in IP67 and an immersion requirement in GB38031.

The present application provides a battery pack. The first channel (that is, the thermal runaway pressure relief channel), the second channel (that is, the electric part mounting channel), the third channels (that is, the pressure relief channels at the bottoms of the battery cells), and the battery cells are separated arranged, so that a risk that after thermal runaway occurs in the battery cells, thermal runaway aggravates due to short circuit caused by contact between high-temperature gas or burning materials and the electric parts can be lowered. In addition, the first channel and the second channel are provided in the frame, and the third channels are provided in the bottom protection plate, so that internal space of the battery pack can be properly utilized, to reduce space occupancy.

## Claims

1. A battery pack, comprising:
a case (10), wherein the case (10) comprises a bottom protection plate (100), a frame (200), and an upper cover (300), the frame (200) is located on the bottom protection plate (100), the upper cover (300) is located on the frame (200), wherein the bottom protection plate (100), the frame (200), and the upper cover (300) enclose to form an accommodation cavity; and
a plurality of battery cells (20) disposed on the bottom protection plate (100) and located in the accommodation cavity, wherein
a pressure relief valve (400) is disposed on the frame (200), a first channel (210) and a second channel (220) are provided in the frame (200), the first channel (210) and the second channel (220) are independent of each other, and the first channel (210) is communicated with the pressure relief valve (400); a plurality of pressure relief holes (111) is provided on a side of the bottom protection plate (100) facing the accommodation cavity, a third channel (112) is provided in the bottom protection plate (100); the plurality of pressure relief holes (111) is communicated with the third channel (112), and the third channel (112) is communicated with the first channel (210); and
the first channel (210) and the third channel (112) are configured as pressure relief channels, and the second channel (220) is configured as an electric part accommodation channel.

2. The battery pack of claim 1, wherein the frame (200) further comprises a fourth channel (230), and in a direction perpendicular to the bottom protection plate (100), the first channel (210), the second channel (220), and the fourth channel (230) are sequentially stacked and independent of each other, wherein the first channel (210) is provided on a side of the bottom protection plate (100) close to the battery cells (20), and the fourth channel (230) is provided on a side of the upper cover (300) close to the battery cells (20).

3. The battery pack of claim 1, wherein the first channel (210) comprises a first sub-channel (211) and a second sub-channel (212), the first sub-channel (211) is communicated with the pressure relief valve (400), the second sub-channels (212) are communicated with the first sub-channel (211), and the third channels (112) are communicated with the second sub-channels (212).

4. The battery pack of claim 3, wherein the battery pack further comprises a fire-resistant component (500), and the fire-resistant component (500) is disposed in the first channel (210) and located between the pressure relief valve (400) and a junction formed by the second sub-channels (220) and the first sub-channel (211).

5. The battery pack of claim 4, wherein the fire-resistant component (500) further comprises a fire-resistant net (510) and a support (520); a through hole (530) running through the support (520) is provided in the support (520), the through hole (530) is communicated with the first channel (210); and the fire-resistant net (510) is located on a side of the support (520) and covers the through hole (530), preferably a material of the fire-resistant net (510) comprises metal wires, and a material of the support (520) comprises metal.

6. The battery pack of claim 4, wherein the battery pack comprises two fire-resistant assemblies (500), and the two fire-resistant assemblies (500) are respectively disposed at two corners on a side of the first channel (210) close to the pressure relief valve (400).

7. The battery pack of claim 6, wherein the support (520) is wedge-shaped and matches a corner shape of the frame (200), and one end of the support (520) provided with the fire-resistant net (510) is close to the battery cells (20).

8. The battery pack of claim 4, wherein the fire-resistant component (500) further comprise a reinforcing rib (540), and the reinforcing rib (540) is located at a side of a fire-resistant net (510) close to the through hole (530).

9. The battery pack of claim 1, wherein the bottom protection plate (100) comprises a battery cell connecting portion (110) and a battery cell non-connecting portion (120), the third channels (112) are provided in the battery cell connecting portion (110), and the battery cell non-connecting portion (120) is of a flat-plate structure.

10. The battery pack of claim 1, wherein the battery pack comprises a plurality of rows of battery cells (20), and the plurality of battery cells (20) extends in a first direction.

11. The battery pack of claim 10, wherein a plurality of third channels (112) is provided in the bottom protection plate (100), the plurality of third channels (112) is arranged at intervals, the plurality of third channels (112) extends in the first direction, and wherein each of the plurality of third channels (112) corresponds to a row of the battery cells (20).

12. The battery pack of any one of claims 1 to 11, wherein the battery pack further comprises a sealing strip (310), and the sealing strip (310) is disposed between the upper cover (300) and the frame (200).

13. The battery pack of claim 12, wherein a plurality of flanges (320) is provided on edges of the upper cover (300), and the plurality of flanges (320) extends toward a side of the frame (200) and is fixedly connected to the frame (200).

14. The battery pack of claim 13, wherein the plurality of flanges (320) and the upper cover (300) are of an integrated structure.

15. The battery pack of claim 13, wherein the plurality of flanges (320) covers the sealing strip (310) and a junction formed by the upper cover (300) and the frame (200).
